# EUROPÄISCHE PATENTSCHRIFT

(11) **EP 3 798 276 B1**
(45) Veröffentlichungstag und Bekanntmachung des Hinweises auf die Patenterteilung: **07.06.2023**
(21) Anmeldenummer: 19200198.0
(22) Anmeldetag: 27.09.2019
(51) Int. Cl.: C09D 11/38, C09D 11/102, C09D 11/107

(54) **WÄSSRIGE LACKZUSAMMENSETZUNG**
AQUEOUS PAINT COMPOSITION
COMPOSITION DE PEINTURE AQUEUSE

(43) Veröffentlichungstag der Anmeldung: 31.03.2021
(73) Patentinhaber: ARCOLOR AG, CH-9104 Waldstatt (CH)
(72) Erfinder: Haasters, Peer, 9200 Gossau (CH); Egloff, David, 9300 Wittenbach (CH); Waldhör, Eberhard, 9320 Arbon (CH)
(74) Vertreter: Hepp Wenger Ryffel AG

(56) Entgegenhaltungen:
- EP-A1- 3 048 144
- EP-A2- 0 391 322
- CN-A- 106 349 811
- US-A1- 2017 121 543
- US-A1- 2018 051 182

## Beschreibung

Die vorliegende Erfindung betrifft eine wässrige Lackzusammensetzung zur Herstellung einer Lackschicht in einem DOD Inkjet-Verfahren.

Der Inkjet-Druck hat in den letzten Jahren erheblich an Bedeutung zugenommen. Unter anderem erlaubt der Inkjet-Druck die kostengünstige Produktion von Artikeln basierend auf digitalen Vorlagen, weswegen er auch als Digitaldruck bezeichnet wird.

Beim Inkjet-Druck werden kleine Tropfen einer Flüssigkeit aus einem Druckkopf ausgestossen und auf ein Substrat aufgebracht. Die Tinte muss für diesen Zweck eine geringe Viskosität aufweisen.

Es wird generell zwischen dem DOD (Drop on demand)-inkjet-Verfahren und dem CIJ (Continuous ink jet)-Verfahren unterschieden. Beim DOD-Verfahren werden Flüssigkeitstropfen nur auf Befehl (beispielsweise von einer Prozesssteuerungseinheit wie einem Computer) aus dem Druckkopf ausgestossen. Bei DOD-Druccköpfen mit Rezirkulation der Flüssigkeit wird diese in einem kontinuierlichen Strom innerhalb des Druckkopfes an den Düsen vorbeigeführt. Dies führt dazu, dass die Flüssigkeit am Meniskus der Düsen regelmässig erneuert wird und so ein Eintrocknen der Düsen durch Verdampfung von Lösemittel oder Wasser verhindert wird. Besonders vorteilhaft wirkt sich dieser Effekt bei der Verwendung von Flüssigkeiten mit hohem Bindemittelfeststoffanteil aus.

Aufgrund ihrer Zusammensetzung auf Wasserbasis haften übliche Inkjet-Tinten schlecht auf hydrophoben Oberflächen, weisen eine schlechte Wasser- beziehungsweise Lösungsmittelbeständigkeit auf und erzeugen Drucke mit teilweise unbefriedigenden Eigenschaften, wie geringer optischer Dichte oder unzureichendem Glanz. Zudem neigen Inkjet-Tinten mit hohem Feststoffgehalt (zur Verbesserung der Glanzeigenschaften) zur Antrocknung und in der Folge Verstopfung der Düsen. Inkjet-Tinten sollten auch nicht schäumen.

In der US-10,189,271 B2 wurden nichtschäumende partikelfreie wässrige Inkjet-Tinten beschrieben, welche durch die Anwesenheit eines spezifischen Entschäumungsmittels charakterisiert sind.

Es war die Aufgabe der vorliegenden Erfindung, eine wässrige Lackzusammensetzung zur Herstellung einer Lackschicht in einem Inkjet-Verfahren bereitzustellen, welche in einem DOD-Verfahren aufgebracht werden kann und Schichten mit verbesserten Eigenschaften wie Glanz, Haftung und Kratzfestigkeit liefert.

Diese Aufgabe wird durch die erfindungsgemässe wässrige Lackzusammensetzung gelöst.

Im Detail betrifft die vorliegende Erfindung eine wässrige Lackzusammensetzung, umfassend
- eine Bindemittelzusammensetzung, umfassend ein Polyacrylat und ein Polyurethan,
- mindestens ein Feuchthaltemittel, und
- Wasser
dadurch gekennzeichnet, dass die Lackzusammensetzung einen Bindemittelfeststoffanteil von mindestens 20 Gew.-% aufweist, bezogen auf das Gesamtgewicht der Lackzusammensetzung, und das Feuchthaltemittel eine Kombination aus 1, 3-Butandiol, Butyldiglykol und Glycerin ist.

Es wurde überraschend gefunden, dass durch eine zielgerichtete Auswahl an Bindemitteln und Feuchthaltemitteln eine wässrige Lackzusammensetzung bereitgestellt werden kann, in welcher ein vergleichsweise hoher Bindemittelfeststoffanteil von mindestens 20 Gew.-% eingebracht werden kann, welche in einem Inkjet-Verfahren zu einem Lack mit grosser Schichtdicke verdruckt werden kann, was zu einer Lackschicht mit vorteilhaften Glanz- und Beständigkeitseigenschaften führt. Insbesondere im DOD-Verfahren kann die wässrige Lackzusammensetzung ohne Zugabe eines Entschäumungsmittels gut verdruckt werden.

Die erfindungsgemässe wässrige Lackzusammensetzung enthält eine Bindemittelzusammensetzung, umfassend ein Polyacrylat und ein Polyurethan. Die verwendeten Bestandteile sollten eine für den Inkjet-Druck geeignete Teilchengrössenverteilung aufweisen; insbesondere sollen im Wesentlichen keine Grobteilchen (≥ 1.5 µm) enthalten sein.

Polyacrylate sind hinlänglich bekannt(z.B. Ulrich Poth, Reinhold Schwalm, Manfred Schwartz: "Acrylatharze"; Hannover: Vincentz Network, 2011). Sie basieren auf einem Acrylat oder Methacrylat (d.h. Estern der Acrylsäure oder Methacrylsäure, insbesondere C₁₋₁₀ Alkylester) oder Acrylsäure beziehungsweise Methacrylsäure als Monomerkomponente. Erfindungsgemäss umfasst der Begriff Polyacrylat neben Homopolymeren aus den vorstehend genannten Monomeren aber auch Copolymere von Acrylat oder Methacrylat mit anderen ethylenisch ungesättigen Monomeren, wie beispielsweise Styrol, Divinylbenzol, Acrylnitril, Methacrylnitril, Vinylacetat, Vinylpropionat, Vinylidenchlorid, Vinylchlorid, Butadien, Isopren, Acrylamid, Maleinsäure und Derivativen davon. Erfindungsgemäss verwendbare Polyacrylate können Blockcopolymere oder Polymere mit zufälliger Anordnung der Monomereinheiten in der Polymerkette sein. Erfindungsgemäss bevorzugt ist das Polyacrylat ein Polystyrolacrylat.

Das erfindungsgemäss verwendbare Polyacrylat kann ein Gewichtsmittel-Molekulargewicht (Mw) im Bereich von 1000 bis 100000 Da, vorzugsweise 5000 bis 50000 Da aufweisen, welches beispielweise durch GPC (Gelpermationschromatographie) bestimmt werden kann.

Eine breite Palette von erfindungsgemäss verwendbaren Polyacrylaten ist kommerziell erhältlich, beispielsweise unter den Handelsnamen Alberdingk^{®} von Alberdingk-Boley, Induprint^{®} von Indulor, Joncryl^{®} von BASF, Neocryl^{®} von DSM, Plextol^{®} von Worlée, oder Setaqua^{®} von Allnex.

Das erfindungsgemäss verwendbare Polyacrylat wird als Dispersion (Latex) in Wasser eingesetzt und weist einen Bindemittelfeststoffanteil im Bereich von 30 bis 60 Gew.-%, vorzugsweise 40 bis 55 Gew.-% auf, bezogen auf das Gesamtgewicht der Dispersion. Alternativ kann auch ein alkalilösliches Polyacrylat-Copolymer oder eine Lösung davon eingesetzt werden.

Polyurethane sind ebenfalls hinlänglich bekannt (z.B. Ulrich Meier-Westhues: "Polyurethane - Lacke, Kleb- und Dichtstoffe"; Hannover: Vincentz Network, 2007). Sie basieren auf einem Polykondensationsprodukt einer Polyisocyanatkomponente (üblicherweise Diisocyanat) und einem Polyol (üblicherweise Diol) als Monomerkomponenten. Beispielhaft seien als Polyisocyanatkomponente genannt: Aromatische, araliphatische, aliphatische or cycloaliphatische Diisocyanate wie Xylylendiisocyanat, Tetramethylendiisocyanat, 1,12-Diisocyanatododecan, Hexamethylendiisocyanat, 2,3,3-Trimethylhexamethylendiisocyanat, 1,4-Cyclohexylendiisocyanat, 4,4'-Dicyclohexylmethandiisocyanat, 4,4'-Dicyclohexyldiisocyanat, 1-Diisocyanato-3,3,5-trimethyl-5-isocyanatomethylcyclohexan (Isophorondiisocyanat), 1,4-Phenylendiisocyanat, 2,6-Tolylendiisocyanat, 2,4-Tolylendiisocyanat, 1,5-Naphthylendiisocyanat, 2,4'- oder 4,4'-Diphenylmethandiisocyanat, 4,4'-Diphenyldimethylmethandiisocyanat, oder α,α,α,α'-Tetramethyl-m- oder -p-xylylendiisocyanat.

Als Polyolkomponente kommen gewöhnliche Alkandiole oder -triole in Betracht. Beispielhaft seien als Polyolkomponente genannt: Ethylenglykol, Polyethylenglykol, Propylenglykol, Polypropylenglykol, Tetramethylenglykol, Polytetramethylenglykol, 1,6-Hexandiol, Neopentylglycol, 1,4-Cyclohexandimethanol, 3-Methyl-1,5-pentandiol, 1,9-Nonandiol, oder 2-Methyl-1,8-octandiol.

Gemäss der vorliegenden Erfindung können auch Copolymere aus Polyurethanen und Polyestern, Polyethern und Polycarbonaten eingesetzt werden. Es handelt sich hierbei um Polymere, bei denen Polyurethankomponenten und Polyesterkomponenten beziehungsweise Polyetherkomponenten oder Polycarbonatkomponenten zusammen in der Polymerkette vorhanden sind, in Blöcken (Blockcopolymere), abwechselnd oder ungeordnet. Eine Verknüpfung von Polyurethan- und Polyestereinheiten kann beispielsweise über freie Hydroxylgruppen einer Polyolkomponente eines Polyurethans oder Polyesters erfolgen, welche mit einer Isocyanatgruppe beziehungsweise einer Carboxylgruppe reagieren kann.

Polyester sind hinlänglich bekannt. Sie sind Polykondensationsprodukte aus Polyolen wie beispielsweise den vorstehend bei den Polyurethanen genannten Diolen oder Triolen, und zwei- oder mehrwertigen Carbonsäuren, d.h. Carbonsäuren mit zwei oder mehr Carboxylgruppen. Beispielhaft seien genannt: Phthalsäure, Isophthalsäure, Terephthalsäure, Maleinsäure, Fumarsäure, Adipinsäure, Sebacinsäure oder Lactone wie Caprolacton.

Polyether sind hinlänglich bekannt. Erfindungsgemäss bevorzugt können Polyetherpolyole auf Basis von Ethylenoxy- oder Propylenoxy-Einheiten oder einer Mischung derselben eingesetzt werden.

Polycarbonate sind hinlänglich bekannt. Erfindungsgemäss bevorzugt können Polycarbonatpolyole eingesetzt werden, die beispielsweise durch die Reaktion von Diolen, wie 1,2-Propylenglykol, 1,4-Butandiol oder 1,6-Hexandiol, Diethylenglykol, Triethylenglykol oder Tetraethylenglykol oder Gemischen dieser Diole mit Diarylcarbonaten, beispielsweise Diphenylcarbonaten, oder Phosgen, erhalten werden.

Polyurethane, Polyesterpolyurethane, Polyetherpolyurethane und Polycarbonatpolyurethane beziehungsweise ihre Ausgangsmonomere sind kommerziell erhältlich beziehungsweise auf bekannte Weise erhältlich. Die verschiedenen Polyurethane sind beispielsweise unter den Handelsnamen Alberdingk^{®} von Alberdingk-Boley, Daotan^{®} von Allnex, Joncryl^{®} von BASF, Bayhydrol^{®}, Impranil^{®} von Covestro, Neorez^{®} von DSM, Esajet^{®} und Esacote^{®} von Lamberti, Takelac von Mitsui erhältlich.

Erfindungsgemäss besonders bevorzugt wird ein Polyesterpolyurethan oder Polycarbonatpolyurethan als Polyurethan eingesetzt.

Das erfindungsgemäss verwendbare Polyurethan kann ein Gewichtsmittel-Molekulargewicht (Mw) im Bereich von 1000 bis 1000000 Da, vorzugsweise 5000 bis 500000 Da aufweisen, welches beispielweise durch GPC (Gelpermationschromatographie) bestimmt werden kann.

Das erfindungsgemäss verwendbare Polyurethan wird als Dispersion (Latex) in Wasser eingesetzt und weist einen Bindemittelfeststoffanteil im Bereich von 20 bis 60 Gew.-%, vorzugsweise 30 bis 50 Gew.-% auf, bezogen auf das Gesamtgewicht der Dispersion.

Gemäss einer besonders bevorzugten Ausführungsform ist die Bindemittelzusammensetzung eine Kombination aus einem Polystyrolacrylat und einem Polyesterpolyurethan.

Gemäss einer bevorzugten Ausführungsform weist die Lackzusammensetzung 40 bis 70 Gew.-%, insbesondere 45 bis 65 Gew.-% der Bindemittelzusammensetzung auf, bezogen auf das Gesamtgewicht der Lackzusammensetzung. Hierbei ist es besonders bevorzugt, dass das Polystyrolacrylat und das Polyesterpolyurethan in der Bindemittelzusammensetzung in einem Gewichtsverhältnis von 10:1 bis 1:10, besonders bevorzugt 6:1 bis 2:1, enthalten sind.

Die erfindungsgemässe wässrige Lackzusammensetzung enthält weiterhin drei Feuchthaltemittel. Erfindungsgemäss kann jedes herkömmliche wasserlösliche oder wassermischbare Feuchthaltemittel verwendet werden, welches mit Wasser eine homogene klare Mischung ergibt. Beispiele sind Alkohole wie Methanol, Ethanol, n- und Isopropanol, n- und s- oder t-Butanol, 2-Propandiol, 1,3-Propandiol, 2-Methyl-1,3-propandiol, 1,2-Butandiol, 1,3-Butandiol, 3-Methoxy-1-butanol, 3-Methyl-1,3-Butandiol (Isopentyldiol), 3-Methoxy-3-methyl-1-butanol, 1,4-Butandiol, 2,3-Butandiol, 1,2,3-Butantriol, 1,2,4-Butantriol, 2,4-Dimethyl-3-pentanol, 1,2-Pentandiol, 4-Methyl-1,2-pentandiol, 1,5-Pentandiol, 3-Methyl-1,5-pentandiol, 2-Methyl-2,4-Pentandiol, 2-Ethyl-3-Methyl-1,5-pentandiol, 2-Ethyl-1,3-Dimethyl-1,5-pentandiol, 1,3,5-(2-Methyl)-pentantriol, 1,2-Hexandiol, 2-Ethyl-1,3-Hexandiol, 2,5-Dimethyl-2,5-Hexandiol, 1,6-Hexandiol, 1,2,6-Hexantriol, 2,6-Dimethyl-4-heptanol, 2,4-Heptandiol, 2-Pyrrolidon, N-(2-Hydroxyethyl)-2-pyrrolidone, 3-Hexin-2,5-diol, 3-Methoxybutanol, Clariant-Polyole (Polyglykol P, M, G-Serie), Harnstoffderivate wie (2-Hydroxyethyl)-harnstoff, Glycerin, Diglycerin, Polyglycerin, Glycerinether (Leunapon von Leuna Chemie), Isopropylidenglycerin, Pluriol A von BASF, Glycerin- und Diglycerinethoxylate und -propoxylate), Ethylenglykol, Diethylenglykol, Diethylenglykolmonobutylether, Diethylenglykolmethylethylether, Diethylenglykol-2-ethylhexyl-ether, Triethylenglykol, Polyethylenglykole, Propylenglykol, Dipropylenglykol, Dipropylenglykolmethylether, Dipropylenglykolmonobutylether, Dipropylenglykolisobornylether, Tripropylenglykol, Tripropylenglykolmethylether, Tripropylenglykoldimethylether, Polypropylenglykol, Trimethylolpropan, substituierte, insbesondere ethoxyliertes Trimethylolpropan, 1,3-Dimethyl-2-imidazolidinon, 3-Ethoxypropionsäure, 2-Methylpentansäure, 2-Ethylhexansäure, 2-Ethyl-3-propylacylsäure, tert.-Butanol, Thiodiglykol, Zuckeralkohole wie z.B. Arabitol, Mannitol, Sorbitol, Kohlenhydrate wie z.B. Saccharose, Dextrose, Trehalose, Glycin, Polyoxypropylen-Methylglucoside, Polyethylenimine, Polyacrylamide, Stärken, Mono/Di/Tri-Acetin (Glycerinacetat), Sulfolan (Tetrahydrothiophen-1,1,-dioxid), 3-Ethyl-3-hydroxymethyl-oxetan, 3-Butoxy-N,N-dimethylpropanamid, N,N-Dimethyl-3-propanamid, 3-Ethoxy-N,N-dimethylpropanamid, 3-Methoxy-N,N-dimethylpropanamid, 3-Ethyl-3-oxetanmethanol, und 3-Methyl-3-oxetanmethanol.

Die Lackzusammensetzung weist als Feuchthaltemittel eine Kombination aus 1,3-Butandiol, Butyldiglykol und Glycerin auf.

Gemäss einer bevorzugten Ausführungsform umfasst die Lackzusammensetzung 5 bis 20 Gew.-%, vorzugsweise 8 bis 18 Gew.-%, insbesondere bevorzugt 10 bis 16 Gew.-%, an den Feuchthaltemittel, bezogen auf das Gesamtgewicht der Lackzusammensetzung.

Bei der beanspruchten Ausführungsform einer Lackzusammensetzung mit einem Feuchthaltemittel, welches aus einer Kombination aus 1,3-Butandiol, Butyldiglykol und Glycerin besteht, können die Komponenten in einem Verhältnis von 1:1:1 eingesetzt werden. Es kann aber auch eine der Komponenten in einem Überschuss von 2:1 bis 10:1 im Vergleich zu den beiden anderen Komponenten eingesetzt werden. Alternativ kann eine der Komponenten in einem Unterschuss von 2:1 bis 10:1 im Vergleich zu den beiden anderen Komponenten eingesetzt werden. Auch andere Mischungsverhältnisse sind möglich, wobei das Verhältnis der in grösster Menge vorliegenden Komponente zu der in kleinster Menge vorliegenden Komponente nicht grösser als 10:1 betragen sollte.

Es hat sich erfindungsgemäss gezeigt, dass bei einer gezielten Kombination von Bindemitteln und Feuchthaltemitteln eine Lackzusammensetzung bereitgestellt werden kann, welche einen Bindemittelfeststoffanteil von mindestens 20 Gew.-%, vorzugsweise 20 bis 60 Gew.-%, besonders bevorzugt 22 bis 55 Gew.-% und insbesondere bevorzugt 25 bis 40 Gew.-% aufweist, bezogen auf das Gesamtgewicht der Lackzusammensetzung. Als besonders bevorzugt hat sich in diesem Zusammenhang eine wässrige Lackzusammensetzung, welche als Bindemittelzusammensetzung eine Kombination aus einem Polystyrolacrylat und einem Polyester- oder Polycarbonatpolyurethan, vorzugsweise in einer Menge von 40 bis 70 Gew.-%, insbesondere 45 bis 65 Gew.-%, bezogen auf das Gesamtgewicht der Lackzusammensetzung, in Verbindung mit einem Feuchthaltemittel, welches aus einer Kombination aus 1,3-Butandiol, Butyldiglykol und Glycerin besteht und vorzugsweise in einer Menge von 5 bis 20 Gew.-%, bevorzugt 8 bis 18 Gew.-%, insbesondere bevorzugt 10 bis 16 Gew.-%, bezogen auf das Gesamtgewicht der Lackzusammensetzung, enthalten ist, aufweist.

Die erfindungsgemässe wässrige Lackzusammensetzung kann weiterhin für Inkjet-Druckfarben übliche Additive wie zum Beispiel Netzmittel, Biozide, Basen oder rheologische Additive umfassen. Es zeichnet die erfindungsgemässe wässrige Lackzusammensetzung aus, dass sie kein Entschäumungsmittel enthalten muss, um in einem Inkjet-Verfahren eingesetzt werden zu können.

Ein Beispiel von für Inkjet-Druckfarben üblichen Additiven sind oberflächenaktive Substanzen wie Polyethylenoxide, Alkylphenylpolyethylenoxide, Polyethylenoxid-Blockcopolymere, Polyethylenoxidester, Polyethylenoxidamine, Polyethylenoxidalkylsulfonate und -sulfate, Polyethylenoxidalkylphosphate, Acetylendiole, ethoxyliertes Acetylendiole, Alkoholalkoxylate, oder Substanzen auf Silikonbasis. Derartige oberflächenaktive Substanzen sind beispielsweise unter dem Handelsnamen Hydropalat^{®} von BASF, BYK^{®} von BYK Chemie, Dow Corning^{®} von Dow Corning, Tego Wet^{®} und Dynol^{®} von Evonik, Metolat^{®} von Münzing, oder Silco Wet^{®} von Silcona erhältlich.

Ein weiteres Beispiel von für Inkjet-Druckfarben üblichen Additiven sind Wachse wie Polyolefinwachse, welche beispielsweise unter den Handelsnamen Joncryl Wax^{®} von BASF, Aquacer^{®} von Byk Chemie, Ultralube^{®} von Keim Additec kommerziell erhältlich sind.

Zusätzlich können weitere Additive wie Puffermittel, alkalische Additive wie Ammoniak oder primäre, sekundäre, tertiäre Amine (z.B. Monoethanolamin, Diethanolamin, Triethanolamin, Dimethylethanolamin, Mono-, Di- und Triisopropanolamin, oder 2-Amino-2-methyl-1-propanol, Biozide oder Stabilisatoren enthalten sein, welche dem Fachmann bekannt sind. Die erfindungsgemässe wässrige Lackzusammensetzung ist üblicherweise frei von Farbstoffen und/oder Farbpigmenten.

Geeignete Füllstoffe wie Silikate und/oder Aluminate können ebenfalls enthalten sein.

Es ist erfindungsgemäss bevorzugt, dass die wässrige Lackzusammensetzung 0,1 bis 10 Gew.-% an vorstehend genannten Additiven aufweist, bezogen auf das Gesamtgewicht der Lackzusammensetzung.

Den restlichen Anteil der erfindungsgemässen Lackzusammensetzung macht Wasser aus, vorzugsweise durch Osmose oder Destillation gereinigtes Wasser. Üblicherweise beträgt die Menge an Wasser in der erfindungsgemässen wässrigen Lackzusammensetzung 10 bis 55 Gew.-%, vorzugsweise 20 bis 45 Gew.-% auf, bezogen auf das Gesamtgewicht der Lackzusammensetzung.

Die Gewichtsprozente der Komponenten der erfindungsgemässen Lackzusammensetzung summieren sich zu 100%.

Die Komponenten der erfindungsgemässen wässrigen Lackzusammensetzung sind vorzugsweise derart ausgewählt, dass die Rezeptur auf die Einsatzfähigkeit für Lebensmittelverpackungen nach der "EuPIA Guideline on Printing Inks Applied to the Non-Food Contact Surface of Food Packaging Materials and Articles" hin optimiert ist und insbesondere die verwendeten Komponenten gemäss Anhang 10 der VO 817.023.21 (Schweizerische Verordnung des EDI über Materialien und Gegenstände, die dazu bestimmt sind, mit Lebensmitteln in Berührung zu kommen) zur Verwendung in Bereichen mit "food contact" zugelassen sind.

Die erfindungsgemässe wässrige Lackzusammensetzung weist vorzugsweise eine Viskosität im Bereich von 4 bis 30 mPas, vorzugsweise 5 bis 25 mPas auf, gemessen bei einer Temperatur von 20 bis 50°C (entsprechend der Temperatur, welche die aus dem Drucckopf ausgestossenen Tropfen aufweisen), vorzugsweise 25°C mit einem üblichen Bestimmungsverfahren (beispielsweise mit einem für diesen Zweck üblicherweise eingesetzten Viskosimeter).

Die erfindungsgemässe wässrige Lackzusammensetzung weist vorzugsweise eine Oberflächenspannung im Bereich von 20 bis 40 mN/m, vorzugsweise 25 bis 35 mN/m auf, gemessen bei einer Temperatur von 20 bis 50°C (entsprechend der Temperatur, welche die aus dem Druckkopf ausgestossenen Tropfen aufweisen), vorzugsweise 25°C mit einem üblichen Bestimmungsverfahren (beispielsweise mit der Wilhelmy-Plattenmethode).

Die erfindungsgemässe wässrige Lackzusammensetzung weist vorzugsweise einen pH-Wert von grösser 7 auf, vorzugsweise im Bereich von 7.5 bis 10.

Die erfindungsgemässe wässrige Lackzusammensetzung weist eine ausreichende Lagerstabilität von mindestens 2 Wochen bei 40°C auf, enthält nur einen geringen Anteil an flüchtigen organischen Lösungsmitteln (VOC) und ist wie vorstehend ausgeführt für "food contact" geeignet, d.h. kann mit Lebensmitteln in Berührung kommen.

Damit eignet sich die erfindungsgemässe wässrige Lackzusammensetzung zum Auftragen auf Verpackungen jeglicher Art, einschliesslich Lebensmittelverpackungen.

Die erfindungsgemässe wässrige Lackzusammensetzung ist für den DOD-Inkjet-Druck sehr gut geeignet, da sie trotz des vorstehend beschriebenen hohen Bindemittelfeststoffanteils eine hohe Ausstossstabilität (jetting stability), gute Scherstabilität, ein langsames Trocknungsverhalten an der Düse (open time), eine hohe Kreislaufstabilität im Rezirkulationskreislauf und keine übermässig grossen Partikel (im Wesentlichen keine Partikel mit einer Grösse von mehr als 1,5 µm) aufweist. Nach der erfindungsgemässen Herstellung werden die wässrigen Lackzusammensetzungen mit einem geeigneten Filter mit einer nominellen Porengrösse von ≤ 1.5 µm filtriert, um Grobpartikel abzutrennen. Geeignete Filter sind zum Beispiel von der Firma Pall erhältlich.

DOD-Druckverfahren sind bekannt und müssen hier nicht näher erläutert werden. Die erfindungsgemässe wässrige Lackzusammensetzung kann in bekannten DOD-Druckern (beispielsweise von Ricoh) mit üblichen Druckköpfen (wie Rezirkulationsköpfen mit piezoelektrischen Elementen von Ricoh, Fujifilm Dimatix, Kyocera, Seiko, Xaar) verdruckt werden.

Die vorliegende Erfindung betrifft somit auch ein Verfahren zum Bedrucken eines Substrats, umfassend den Schritt des Bedruckens des Substrats mit einer wässrigen Lackzusammensetzung gemäss der vorliegenden Erfindung in einem inkjet-Verfahren, vorzugsweise in einem Drop-on-Demand inkjet-Verfahren (DOD).

Gemäss einer bevorzugten Ausführungsform der vorliegenden Erfindung handelt es sich um ein single pass-Verfahren. Die Verwendung eines Scanningverfahrens ist ebenfalls möglich. Unter single pass versteht man ein Verfahren, bei welchem der Druckkopfträger des Druckers in einer festen Position bleibt, während das zu bedruckende Material unter dem Träger hindurch befördert und in einem Durchgang vollständig bedruckt wird. Nach dem Druck wird die aufgetragene Lackschicht vorzugsweise getrocknet, beispielsweise mit IR- oder NIR-Strahlung oder mit Heissluft oder einer Kombination daraus.

Mit der erfindungsgemässen wässrigen Lackzusammensetzung können, vorzugsweise in einem DOD-Inkjet-Verfahren, Schichten hergestellt werden, welche eine Dicke im getrockneten Zustand im Bereich von 1 bis 50 µm aufweisen. Dies entspricht dem Auftrag einer Menge der wässrigen Lackzusammensetzung im Bereich von 6 bis 200 g/m².

Mit diesen Schichtdicken weisen die erfindungsgemäss herstellbaren Schichten sehr gute Glanzeigenschaften auf. Zudem zeichnen sich die erfindungsgemäss herstellbaren Schichten durch sehr gute Kratzfestigkeit, Blockfestigkeit, Wasserbeständigkeit, und Knickfestigkeit auf.

Die erfindungsgemäss herstellbaren Schichten zeigen eine sehr gute Haftung auf verschiedenen Substraten. Daher eignet sich die erfindungsgemässe wässrige Lackzusammensetzung zum Bedrucken eines unbedruckten Substrats, eines Substrat mit einer Tintenempfangsschicht, eines im Tiefdruckverfahren bedruckten Substrats, eines in einem Flexodruckverfahren bedruckten Substrats oder eines in einem Offsetdruckverfahren bedruckten Substrats. Insbesondere können auch auf in einem Inkjet-Verfahren bereits bedruckte Substrate die erfindungsgemäss herstellbaren Schichten aufgebracht werden.

Nach dem Aufdrucken trocknet die erfindungsgemässe wässrige Lackzusammensetzung sehr schnell und ist somit im Wesentlichen nicht klebrig (tack-free). Dadurch eignen sich die erfindungsgemäss herstellbaren Schichten für weitere Verarbeitungsschritte. Beispielsweise können zusätzliche Farb-oder Veredelungsschichten inline auf die erfindungsgemäss hergestellten Schichten aufgebracht werden.

Die vorliegende Erfindung wird nachstehend anhand von nichtlimitierenden Beispielen näher erläutert.

### Beispiel 1

Eine wässrige Lackzusammensetzung wurde aus der in der Tabelle 1 beschriebenen Rezeptur durch Vermischen der einzelnen Komponenten unter Rühren hergestellt.

**Tabelle 1**

| Komponente | Menge (Gew.-%) |
|---|---|
| Wasser | 22.200 |
| Monoethanolamin | 0.100 |
| 1,3-Butandiol | 6.000 |
| Metolat 288 | 1.300 |
| Butyldiglykol | 1.000 |
| Glycerin | 5.400 |
| Makrovil PAC 1445 | 52.000 |
| Takelac W-6355 | 12.000 |

Makrovil PAC 1445 ist eine wässrige Polystyrol-Acrylat-Dispersion mit einem Feststoffgehalt von 40%.

Takelac W-6355ist eine wässrige Polycarbonat-Polyurethan-Dispersion mit einem Feststoffgehalt von 35%.

Die so erhaltene wässrige Lackzusammensetzung hatte einen Bindemittelfeststoffanteil von 25 Gew.-%, eine Viskosität von 10 mPas (bei 25°C) und eine Oberflächenspannung von 30 mN/m (bei 25°C).

### Beispiel 2

Eine wässrige Lackzusammensetzung wurde aus der in der Tabelle 2 beschriebenen Rezeptur durch Vermischen der einzelnen Komponenten unter Rühren hergestellt.

**Tabelle 2**

| Komponente | Menge (Gew.-%) |
|---|---|
| Wasser | 23.700 |
| Monoethanolamin | 0.100 |
| 1,3-Butandiol | 5.000 |
| Metolat 288 | 1.200 |
| Butyldiglykol | 1.000 |
| Glycerin | 4.000 |
| Makrovil PAC 1445 | 50.000 |
| Esacote PU 40 | 15.000 |

Makrovil PAC 1445 ist eine wässrige Polystyrol-Acrylat-Dispersion mit einem Feststoffgehalt von 40%.

Esacote PU 40 ist eine wässrige Polyester-Polyurethan-Dispersion mit einem Feststoffgehalt von 35%.

Die so erhaltene wässrige Lackzusammensetzung hatte einen Bindemittelfeststoffanteil von 25 Gew.-%, eine Viskosität von 9 mPas (bei 25°C) und eine Oberflächenspannung von 30 mN/m (bei 25°C).

### Beispiel 3

Die wässrige Lackzusammensetzung gemäss Beispiel 1 wurde in einem DOD-Inkjet-Verfahren mit einem Ricoh MH2810F-Rezirkulationskopf auf ein unbedrucktes Substrat gedruckt. In einem single Pass-Verfahren konnte eine Schicht mit einer Auftragsmenge von 9 g/m² und einer entsprechenden Schichtdicke von 3 µm aufgedruckt werden. Die so hergestellte Schicht war nicht klebrig, verblockte nicht und zeigte einen hohen Glanz.

## Patentansprüche

1. Wässrige Lackzusammensetzung für ein DOD-Inkjet-Verfahren mit Rezirkulation, umfassend
- eine Bindemittelzusammensetzung, umfassend ein Polyacrylat in Form einer wässrigen Dispersion und ein Polyurethan in Form einer wässrigen Dispersion,
- mindestens ein Feuchthaltemittel, und
- Wasser
**dadurch gekennzeichnet, dass** die Lackzusammensetzung einen Bindemittelfeststoffanteil von mindestens 20 Gew.-% aufweist, bezogen auf das Gesamtgewicht der Lackzusammensetzung, und das Feuchthaltemittel eine Kombination aus 1,3-Butandiol, Butyldiglykol und Glycerin ist.

2. Wässrige Lackzusammensetzung nach Anspruch 1, **dadurch gekennzeichnet, dass** die Lackzusammensetzung 40 bis 70 Gew.-% der Bindemittelzusammensetzung aufweist, bezogen auf das Gesamtgewicht der Lackzusammensetzung.

3. Wässrige Lackzusammensetzung nach Anspruch 1 oder 2, **dadurch gekennzeichnet, dass** die Bindemittelzusammensetzung eine Kombination aus einem Polystyrolacrylat und einem Polyesterpolyurethan oder einem Polycarbonatpolyurethan ist.

4. Wässrige Lackzusammensetzung nach Anspruch 3, **dadurch gekennzeichnet, dass** Polystyrolacrylat und das Polyesterpolyurethan beziehungsweise das Polycarbonatpolyurethan in der Bindemittelzusammensetzung in einem Gewichtsverhältnis von 10:1 bis 1:10 enthalten sind.

5. Wässrige Lackzusammensetzung nach einem der vorhergehenden Ansprüche, **dadurch gekennzeichnet, dass** die Lackzusammensetzung 5 bis 20 Gew.-% an mindestens einem Feuchthaltemittel aufweist, bezogen auf das Gesamtgewicht der Lackzusammensetzung.

6. Wässrige Lackzusammensetzung nach einem der vorhergehenden Ansprüche, **dadurch gekennzeichnet, dass** die Lackzusammensetzung 0,1 bis 10 Gew.-% an weiteren Additiven aufweist, bezogen auf das Gesamtgewicht der Lackzusammensetzung.

7. Wässrige Lackzusammensetzung nach einem der vorhergehenden Ansprüche, **dadurch gekennzeichnet, dass** die Lackzusammensetzung kein Entschäumungsmittel enthält.

8. Verfahren zum Bedrucken eines Substrats, umfassend den Schritt des Bedruckens des Substrats mit einer wässrigen Lackzusammensetzung gemäss einem der Ansprüche 1 bis 7 in einem DOD-inkjet-Verfahren mit Rezirkulation.

9. Verfahren nach Anspruch 8, **dadurch gekennzeichnet, dass** das Verfahren ein single-pass-Druckverfahren ist.

10. Verfahren nach Anspruch 8 oder 9, **dadurch gekennzeichnet, dass** das Verfahren mit mindestens einem Rezirkulationskopf mit piezoelektrischen Elementen durchgeführt wird.

11. Verfahren nach einem der vorhergehenden Ansprüche 8 bis 10, **dadurch gekennzeichnet, dass** das Substrat ein unbedrucktes Substrat, ein Substrat mit einer Tintenempfangsschicht, ein in einem Tiefdruckverfahren bedrucktes Substrat, ein in einem Flexodruckverfahren bedrucktes Substrat, ein in einem Inkjetverfahren bedrucktes Substrat oder ein in einem Offsetdruckverfahren bedrucktes Substrat ist.

12. Verfahren nach einem der vorhergehenden Ansprüche 8 bis 11, **dadurch gekennzeichnet, dass** eine Schicht aus der wässrigen Lackzusammensetzung gemäss einem der Ansprüche 1 bis 7 in einer Menge im Bereich von 6 bis 200 g/m² aufgetragen wird, so dass eine Schicht mit einer Dicke im getrockneten Zustand im Bereich von 1 bis 50 µm erhalten wird.

13. Verwendung einer wässrigen Lackzusammensetzung gemäss einem der Ansprüche 1 bis 7 zur Herstellung einer Lackschicht in einem inkjet-Verfahren.

## Claims

1. An aqueous paint composition for a DOD inkjet process with recirculation, comprising
- a binder composition comprising a polyacrylate in the form of an aqueous dispersion and a polyurethane in the form of an aqueous dispersion,
- at least one humectant, and
- water
**characterized in that** the paint composition has a binder solids content of at least 20% by weight, based on the total weight of the paint composition, and the humectant is a combination of 1,3-butanediol, butyl diglycol and glycerol.

2. The aqueous paint composition according to claim 1, **characterized in that** the paint composition comprises 40 to 70% by weight of the binder composition, based on the total weight of the paint composition.

3. The aqueous paint composition according to claim 1 or 2, **characterized in that** the binder composition is a combination of a polystyrene acrylate and a polyester polyurethane or a polycarbonate polyurethane.

4. The aqueous paint composition according to claim 3, **characterized in that** polystyrene acrylate and the polyester polyurethane or the polycarbonate polyurethane are contained in the binder composition in a weight ratio of 10:1 to 1:10.

5. The aqueous paint composition according to any one of the preceding claims, **characterized in that** the paint composition comprises 5 to 20% by weight of at least one humectant, based on the total weight of the paint composition.

6. The aqueous paint composition according to any one of the preceding claims, **characterized in that** the paint composition comprises 0.1 to 10% by weight of further additives, based on the total weight of the paint composition.

7. The aqueous paint composition according to any one of the preceding claims, **characterized in that** the paint composition does not contain a defoaming agent.

8. A method of printing a substrate, comprising the step of printing the substrate with an aqueous paint composition according to any one of claims 1 to 7 in a DOD inkjet process with recirculation.

9. The method according to claim 8, **characterized in that** the method is a single-pass printing method.

10. The method according to claim 8 or 9, **characterized in that** the method is carried out with at least one recirculation head with piezoelectric elements.

11. The method according to any one of the preceding claims 8 to 10, **characterized in that** the substrate is an unprinted substrate, a substrate having an ink-receiving layer, a substrate printed in a gravure printing process, a substrate printed in a flexographic printing process, a substrate printed in an inkjet printing process, or a substrate printed in an offset printing process.

12. Process according to any one of the preceding claims 8 to 11, **characterized in that** a layer of the aqueous paint composition according to any one of claims 1 to 7 is applied in an amount ranging from 6 to 200 g/m² so as to obtain a layer having a thickness in the dried state ranging from 1 to 50 µm.

13. Use of an aqueous paint composition according to any one of claims 1 to 7 for the production of a paint layer in an inkjet process.

## Revendications

1. Composition de peinture aqueuse pour un procédé DOD à jet d'encre avec recirculation, comprenant
- une composition de liant comprenant un polyacrylate sous forme de dispersion aqueuse et un polyuréthane sous forme de dispersion aqueuse,
- au moins un humectant, et
- eau
**caractérisée en ce que** la composition de peinture présente une teneur en solides de liant d'au moins 20 % en poids, par rapport au poids total de la composition de peinture, et l'agent humidifiant est une combinaison de 1,3-butanediol, de butyldiglycol et de glycérine.

2. Composition de peinture aqueuse selon la revendication 1, **caractérisée en ce que** la composition de peinture comprend de 40 à 70 % en poids de la composition de liant, par rapport au poids total de la composition de peinture.

3. Composition de peinture aqueuse selon la revendication 1 ou 2, **caractérisée en ce que** la composition de liant est une combinaison d'un polystyrène acrylate et d'un polyesterpolyuréthane ou d'un polycarbonatepolyuréthane.

4. Composition de peinture aqueuse selon la revendication 3, **caractérisée en ce que** le polystyrène acrylate et le polyester polyuréthane ou le polycarbonate polyuréthane, respectivement, sont contenus dans la composition de liant dans un rapport pondéral de 10:1 à 1:10.

5. Composition aqueuse de peinture selon l'une quelconque des revendications précédentes, **caractérisée en ce que** la composition de peinture comprend de 5 à 20 % en poids d'au moins un agent humectant, par rapport au poids total de la composition de peinture.

6. Composition de peinture aqueuse selon l'une quelconque des revendications précédentes, **caractérisée en ce que** la composition de peinture comprend de 0,1 à 10 % en poids d'autres additifs, par rapport au poids total de la composition de peinture.

7. Composition de peinture aqueuse selon l'une quelconque des revendications précédentes, **caractérisée en ce que** la composition de peinture ne contient pas d'agent antimousse.

8. Procédé d'impression d'un substrat, comprenant l'étape d'impression du substrat avec une composition de peinture aqueuse selon l'une quelconque des revendications 1 à 7 dans un procédé à jet d'encre DOD avec recirculation.

9. Procédé selon la revendication 8, **caractérisé en ce que** le procédé est un procédé d'impression en une seule passe.

10. Procédé selon la revendication 8 ou 9, **caractérisé en ce que** le procédé est mis en oeuvre avec au moins une tête de recirculation comportant des éléments piézoélectriques.

11. Procédé selon l'une quelconque des revendications précédentes 8 à 10, **caractérisé en ce que** le substrat est un substrat non imprimé, un substrat comportant une couche réceptrice d'encre, un substrat imprimé par un procédé d'héliogravure, un substrat imprimé par un procédé d'impression flexographique, un substrat imprimé par un procédé d'impression à jet d'encre ou un substrat imprimé par un procédé d'impression offset.

12. Procédé selon l'une quelconque des revendications précédentes 8 à 11, **caractérisé en ce qu'**une couche de la composition aqueuse de peinture selon l'une quelconque des revendications 1 à 7 est appliquée en une quantité comprise entre 6 et 200 g/m² , de manière à obtenir une couche ayant une épaisseur à l'état sec comprise entre 1 et 50 µm.

13. Utilisation d'une composition de peinture aqueuse selon l'une quelconque des revendications 1 à 7 pour la préparation d'une couche de peinture dans un procédé à jet d'encre.
